# FASCICULE DE BREVET EUROPEEN

(11) **EP 1 941 201 B1**
(45) Date de publication et mention de la délivrance du brevet: **03.07.2013**
(21) Numéro de dépôt: 06820226.6
(22) Date de dépôt: 17.10.2006
(51) Int. Cl.: F16L 37/091, F16L 37/098, F16L 47/02

(54) **DISPOSITIF DE RACCORDEMENT A CORPS SOUDE**
VERBINDUNGSVORRICHTUNG MIT GESCHWEISSTEM KÖRPER
CONNECTING DEVICE WITH WELDED BODY

(30) Priorité: 26.10.2005 FR 0510925
(43) Date de publication de la demande: 09.07.2008
(73) Titulaire: PARKER HANNIFIN MANUFACTURING France SAS, 74100 Ville-la-Grand (FR)
(72) Inventeur: BLIVET, Philippe, F-35200 Rennes (FR); LE QUERE, Philippe, F-35830 Betton (FR); LE BARS, Nicolas, F-35235 Thorigne (FR)
(74) Mandataire: Robert, Jean-Pierre
(86) Numéro de dépôt international: PCT/FR2006/002331
(87) Numéro de publication internationale: WO 2007/048896

(56) Documents cités:
- EP-A2- 1 087 167
- EP-B1- 0 988 488
- DE-A1-102004 001 109
- FR-A- 2 822 520
- US-A- 5 277 456
- US-B1- 6 832 785

## Description

La présente invention concerne un dispositif de raccordement de deux conduits l'un à l'autre dans un circuit de transport de fluide. L'invention a également pour objet un procédé de fabrication d'un tel dispositif de raccordement.

### ARRIERE PLAN DE L'INVENTION

Un dispositif de raccordement comprend un corps tubulaire comportant une première section de connexion et une deuxième section de connexion pour coopérer avec un premier conduit et un deuxième conduit respectivement. La première section de connexion est agencée pour être emmanchée à force dans une extrémité du premier conduit et la deuxième section de connexion est par exemple agencée pour recevoir une extrémité du deuxième conduit et retenir celle-ci par exemple au moyen d'une pince ou d'un verrou radial.

Ces dispositifs de raccordement doivent supporter de multiples contraintes en particulier lorsqu'ils sont implantés sur des véhicules automobiles qui constituent des milieux très exigeants.

Ainsi, les dispositifs de raccordement sont fortement sollicités mécaniquement et ils doivent résister notamment à la pression du fluide dans le circuit, aux efforts exercés par l'extrémité de conduite et l'élément tubulaire, aux vibrations résultant du fonctionnement du véhicule, aux chocs notamment lors d'un accident du véhicule... A ces contraintes s'ajoutent de fortes variations de température entre de basses températures hivernales et de hautes températures au voisinage du moteur en fonctionnement.

Les raccords doivent également présenter une basse perméabilité au fluide qu'ils transportent et lui résister chimiquement ainsi qu'aux fluides avec lesquels ils peuvent être en contact dans le véhicule.

Les dispositifs de raccordement doivent en outre être fiables, aisément réalisables et peu coûteux.

La structure des dispositifs de raccordement résulte donc d'un compromis dans la satisfaction de ces exigences. DE 10 2004 001109 et US 6832785 décrivent des dispositifs de raccordement faisant parti de l'état de l'art.

Le corps tubulaire est ainsi généralement moulé en une seule pièce de matière plastique, ce qui permet d'obtenir des dispositifs de raccordement légers par rapport à des dispositifs de raccordement métalliques et peu onéreux lorsque les formes de ceux-ci sont simples. L'utilisation d'un corps en totalité constitué de matière plastique peut en revanche s'avérer pénalisante en ce qui concerne la résistance mécanique du dispositif de raccordement et la perméabilité du dispositif de raccordement au fluide transporté sauf à utiliser une matière plastique très élaborée, et par conséquent coûteuse, ou à augmenter l'épaisseur des parois du corps tubulaire, ce qui en augmente toutefois la masse et l'encombrement.

Pour améliorer l'ancrage de la première section de connexion dans le premier conduit, il est connu de rapporter sur cette dernière un organe d'ancrage en métal. L'organe d'ancrage peut être une simple rondelle à dents reçue dans une gorge du corps tubulaire. Ce montage de l'organe d'ancrage nécessite que le corps soit en deux parties, généralement encliquetées, augmentant le coût de fabrication du corps tubulaire. Par ailleurs, l'organe d'ancrage est alors libre en rotation sur le corps qui peut alors pivoter par rapport au premier conduit, ce qui peut être gênant dans certaines applications. La fixation de l'organe d'ancrage sur le corps est d'une manière générale délicate et un risque de perte de l'organe d'ancrage avant montage du dispositif de raccordement dans le premier conduit existe dans certaines configurations. Pour résoudre ce problème, il est possible de surmouler le corps tubulaire sur l'organe d'ancrage. Ceci augmente toutefois le coût de fabrication du corps tubulaire.

### OBJET DE L'INVENTION

Un but de l'invention est de fournir un dispositif de raccordement ne présentant pas tout ou partie des inconvénients énoncés ci-dessus.

### RESUME DE L'INVENTION

A cet effet, on prévoit, selon l'invention, un dispositif de raccordement comprenant un corps tubulaire comportant une partie en matière plastique pourvue d'un organe d'ancrage du corps tubulaire dans un premier conduit, l'organe d'ancrage étant en métal, l'organe d'ancrage étant solidaire d'un élément support en métal qui est recouvert au moins partiellement d'une couche de matière plastique compatible avec la matière plastique de ladite partie du corps tubulaire et qui est relié à ladite partie par une soudure locale de ladite partie et de ladite couche.

Ainsi, la fixation de l'organe d'ancrage est simple et solide de sorte que l'organe d'ancrage assure une ferme retenue du corps tubulaire dans le premier conduit.

De préférence, la couche de matière plastique recouvre l'organe d'ancrage.

La couche de matière plastique peut ainsi protéger l'organe d'ancrage contre la corrosion ou contre une agression chimique par le fluide transporté. En outre, lorsque le premier conduit est taraudé, l'organe d'ancrage est agencé pour prendre appui contre le filet du taraudage. La couche de matière plastique empêche un contact direct du métal de l'organe d'ancrage sur le filet, contact direct qui engendrerait un usinage du filet générateur de copeaux qui risqueraient de polluer le fluide transporté ou d'endommager des dispositifs raccordés au circuit de transport de fluide en aval du dispositif de raccordement.

De préférence encore, l'organe d'ancrage est une rondelle à dents solidaire d'une extrémité d'une douille qui est reçue dans le corps tubulaire et forme l'élément support.

L'élément support a ainsi une forme simple offrant une surface suffisante pour réaliser une soudure solide permettant un maintien rigide de l'organe d'ancrage sur le corps tubulaire.

Selon un mode de réalisation particulier, le corps tubulaire comporte une première section de connexion et une deuxième section de connexion pour coopérer respectivement avec le premier conduit et un deuxième conduit, la première section de connexion formant l'élément support de l'organe d'ancrage et étant agencée pour être emmanchée à force dans une extrémité du premier conduit, la deuxième section de connexion formant la partie en matière plastique du corps tubulaire, la première section de connexion ayant une extrémité de liaison recouverte de la couche de matière plastique et reliée par soudure à une extrémité de liaison de la deuxième section de connexion à la première section de connexion, et la première section de connexion délimitant un canal ayant un tronçon d'extrémité qui est destiné à accueillir une partie terminale du deuxième conduit et qui est pourvu de moyens de sa liaison étanche à la partie terminale du deuxième conduit.

La réalisation du corps tubulaire en deux parties, l'une en métal, l'autre en matière plastique, confère au corps tubulaire une résistance mécanique relativement importante et une perméabilité faible tout en en limitant l'impact de l'utilisation de métal sur la masse et le coût du dispositif de raccordement. Comme l'étanchéité de la connexion du deuxième conduit au dispositif de raccordement est assurée dans la première section de connexion, il n'est pas nécessaire que la soudure de la première section de connexion à la deuxième section de connexion soit étanche.

Avantageusement, l'extrémité de liaison de la deuxième section de connexion est pourvue d'un logement annulaire pour recevoir l'extrémité de liaison de la première section de connexion, le logement annulaire étant délimité par deux parois cylindriques coaxiales dont une paroi externe est pourvue d'une zone de frottement sur une portion externe de l'extrémité de liaison de la première section de connexion lors de la soudure

Ceci permet une liaison rigide de la première section de connexion à la deuxième section de connexion.

L'invention a également pour objet un procédé de fabrication d'un tel dispositif de raccordement. Le procédé comprend les étapes d'appliquer la couche de l'élément support contre la partie en matière plastique du corps tubulaire et de mettre en mouvement relatif l'élément support et la partie en matière plastique du corps tubulaire pour réaliser une soudure par friction.

Ce mode de réalisation est particulièrement simple.

Avantageusement, le corps tubulaire comporte une première section de connexion et une deuxième section de connexion pour coopérer respectivement avec le premier conduit et un deuxième conduit, la première section de connexion formant l'élément support de l'organe d'ancrage et étant agencée pour être emmanchée à force dans une extrémité du premier conduit, la deuxième section de connexion formant la partie en matière plastique du corps tubulaire, le procédé comprenant l'étape d'orienter la première section de connexion par rapport à la deuxième section de connexion selon une orientation définitive des sections de connexion, les sections de connexion étant mises en frottement l'une sur l'autre par vibrations en maintenant l'orientation définitive.

Ceci permet de réaliser différentes orientations à partir de sections de connexion identiques alors qu'avec un procédé de fabrication par injection de matière plastique, la réalisation de plusieurs orientations nécessite de disposer d'un moule pour chaque orientation.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en perspective d'un dispositif de raccordement selon un premier mode de réalisation de l'invention,
- la figure 2 est une vue en coupe, selon le plan II de la figure 1, de ce dispositif,
- la figure 3 est une de face d'un dispositif selon une première variante du premier mode de réalisation,
- la figure 4 est une vue de côté de ce dispositif,
- la figure 5 est une vue analogue à celle de la figure 2 d'un dispositif selon une deuxième variante du premier mode de réalisation,
- la figure 6 est une vue analogue à celle de la figure 2 d'un dispositif selon un deuxième mode de réalisation,
- la figure 7 est une vue de détail de la zone VII de la figure 6.

### DESCRIPTION DETAILLEE DE L'INVENTION

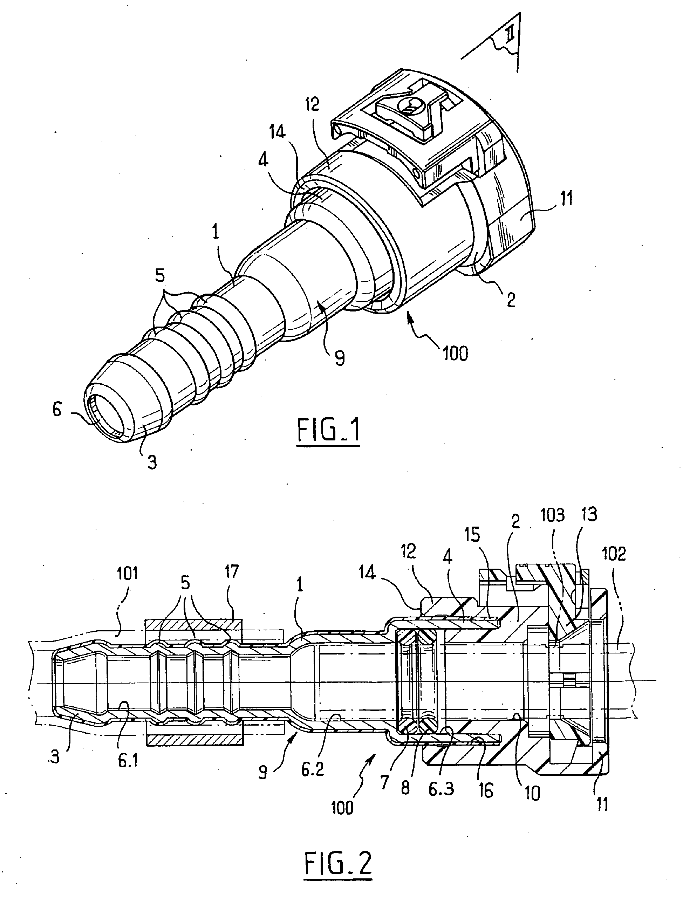

En référence aux figures 1 et 2, le dispositif conforme au premier mode de réalisation de l'invention est agencé pour raccorder un premier conduit 101 et un deuxième conduit 102 qui sont schématisés en trait mixte double sur la figure 2. En l'occurrence, le premier conduit 101 est une conduite et le deuxième conduit 102 est un embout tubulaire pourvu d'un épaulement d'arrêt formé ici d'une gorge 103. L'épaulement d'arrêt peut également être formé par un bourrelet.

Le dispositif comprend un corps, généralement désigné en 100, de forme tubulaire comportant une première section de connexion 1 et une deuxième section de connexion 2 pour coopérer respectivement avec le premier conduit 101 et le deuxième conduit 102.

La première section de connexion 1, de forme tubulaire, comporte une portion d'extrémité 3 agencée pour être emmanchée à force dans une extrémité du premier conduit 101 et une portion d'extrémité 4 de liaison à la deuxième section de connexion 2. La portion d'extrémité 3 a une forme en tétine et est pourvue extérieurement de bourrelets 5 annulaires permettant l'ancrage de la portion d'extrémité 3 dans le premier conduit 101. La portion d'extrémité 4 a une forme étagée s'évasant de la portion d'extrémité 3 à la portion d'extrémité 4. La première section de connexion 1 délimite un canal 6 étagé qui comprend un tronçon d'extrémité 6.1 s'étendant au niveau de la portion d'extrémité 3 et ayant un diamètre sensiblement égal au diamètre interne du deuxième conduit 102, un tronçon central 6.2 ayant un diamètre sensiblement égal au diamètre externe du deuxième conduit 102 et un tronçon d'extrémité 6.3 s'étendant au niveau de la portion d'extrémité 4 et recevant deux joints d'étanchéité annulaires 7, 8 de diamètres internes légèrement inférieurs au diamètre externe du deuxième conduit 102. La première section de connexion 1 est en métal et possède une surface extérieure recouverte d'une couche de protection 9 en matière plastique et plus précisément ici en polyamide. La couche de protection 9 est par exemple réalisée par projection, ou dépôt électrostatique de la matière plastique puis fusion ou par trempage.

La deuxième section de connexion 2, de forme tubulaire, délimite sur toute sa longueur un canal 10 de diamètre supérieur au diamètre externe du deuxième conduit 102 et comporte une portion d'extrémité 11 destinée à accueillir une extrémité du deuxième conduit 102 et une portion d'extrémité 12 de liaison à la première section de connexion 1. La portion d'extrémité 11 est pourvue de moyens de retenue du deuxième conduit 102 dans le canal 10. Ces moyens de retenue, connus en eux-mêmes, comportent ici une bague élastique 13 déformable radialement entre un état de retenue dans laquelle la bague élastique 13 est au repos et comporte des parties en saillie dans le canal 10 et un état déformé de libération dans lequel lesdites parties sont escamotées du canal 10. La portion d'extrémité 12 comporte une face terminale 14 s'étendant perpendiculairement au canal 10 et dans laquelle un logement 15 annulaire est ménagé pour accueillir la portion d'extrémité 4 de la première section de connexion 1. Le logement 15 est délimité par deux parois cylindriques, coaxiales au canal 10. La deuxième section de connexion 2 est en matière plastique et plus précisément ici du polyamide.

La première section de connexion 1 est reliée à la deuxième section de connexion 2 par une soudure de la portion d'extrémité 4 dans le logement 15 de la portion d'extrémité 12. La soudure est réalisée par friction en mettant en mouvement relatif la portion d'extrémité 4 et une zone de frottement 16 ménagée sur une paroi externe du logement 15 de manière à provoquer une fusion locale de la couche de protection 9 et de la matière plastique attenante de la paroi externe du logement 15. Le mouvement relatif peut être un mouvement de rotation ou résulter de vibrations.

En utilisation, la première section de connexion 1 est emmanchée à force dans l'extrémité du premier conduit 101 et une bague 17 est sertie sur le premier conduit 101 en regard des reliefs 5 de la portion d'extrémité 3, la première section de connexion 1 doit donc être agencée (et notamment avoir une épaisseur suffisante) pour résister à l'effort de sertissage de la bague 17.

L'extrémité du deuxième conduit 102 est engagée, au travers de la bague élastique 13, déformée, dans le canal 10 puis dans le tronçon d'extrémité 6.3 et le tronçon central 6.2 jusqu'à ce que la bague élastique 13 soit en regard de la gorge 103 et revienne dans son état de retenue de manière à saillir dans la gorge 103 et s'opposer au mouvement du deuxième conduit 102. Les joints d'étanchéité 7, 8 sont alors comprimés radialement entre l'extrémité du deuxième conduit 102 et la paroi du tronçon d'extrémité 6.3. La soudure n'a donc pas besoin d'être étanche.

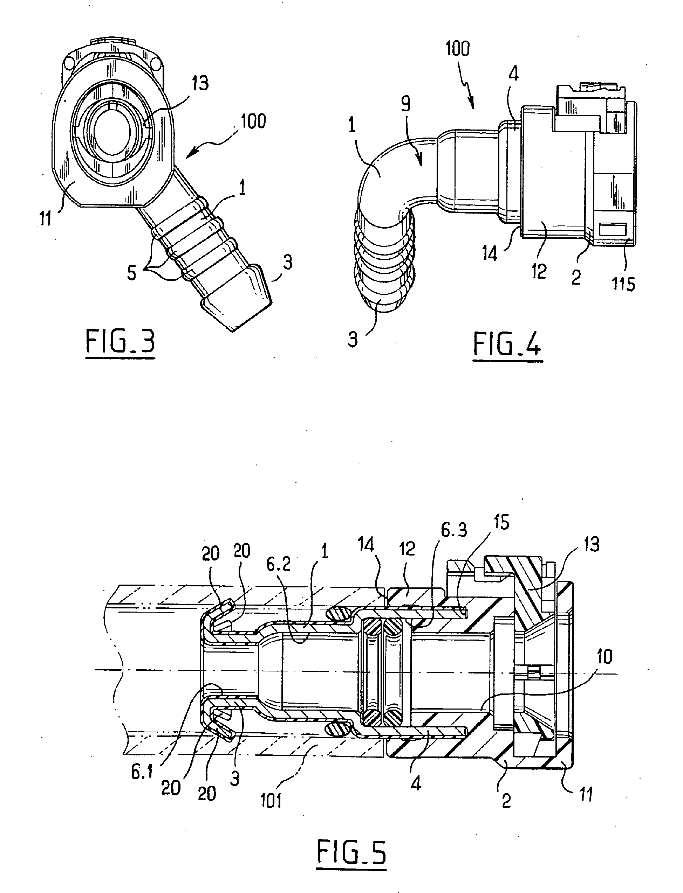

Selon une première variante du premier mode de réalisation, représentée aux figures 3 et 4, le corps 100 est coudé (le coude est ici situé sur la portion d'extrémité 4 de la première section de connexion 1). Comme la bague élastique 13 a sa partie d'actionnement, permettant de la déformer, qui s'étend en saillie sur un côté de la deuxième section de connexion (la deuxième section de connexion 2 n'a pas de symétrie de révolution), il est nécessaire que les sections de connexion 1 et 2 soient orientées l'une par rapport à l'autre afin d'éviter que la partie d'actionnement se trouve en une position difficilement accessible une fois la première section de connexion 1 implantée par exemple dans le conduit d'un élément fixe d'un circuit de transport de fluide.

Le procédé de fabrication de ce dispositif de raccordement comprend les étapes d'orienter la première section de connexion 1 par rapport à la deuxième section de connexion 2 selon une orientation définitive des sections de connexion 1 et 2 l'une par rapport à l'autre et de mettre les sections de connexion 1 et 2 en frottement l'une contre l'autre par vibrations en maintenant l'orientation définitive.

Selon une deuxième variante représentée à la figure 5, la première section de connexion 1 a l'extrémité libre de la portion d'extrémité 3 pourvue de dents 20 en saillie vers l'extérieur pour assurer l'ancrage de la première section de connexion 1 dans un premier conduit 101 lisse ou taraudé.

Les éléments identiques ou analogues porteront une même référence numérique dans la description qui suit d'un deuxième mode de réalisation.

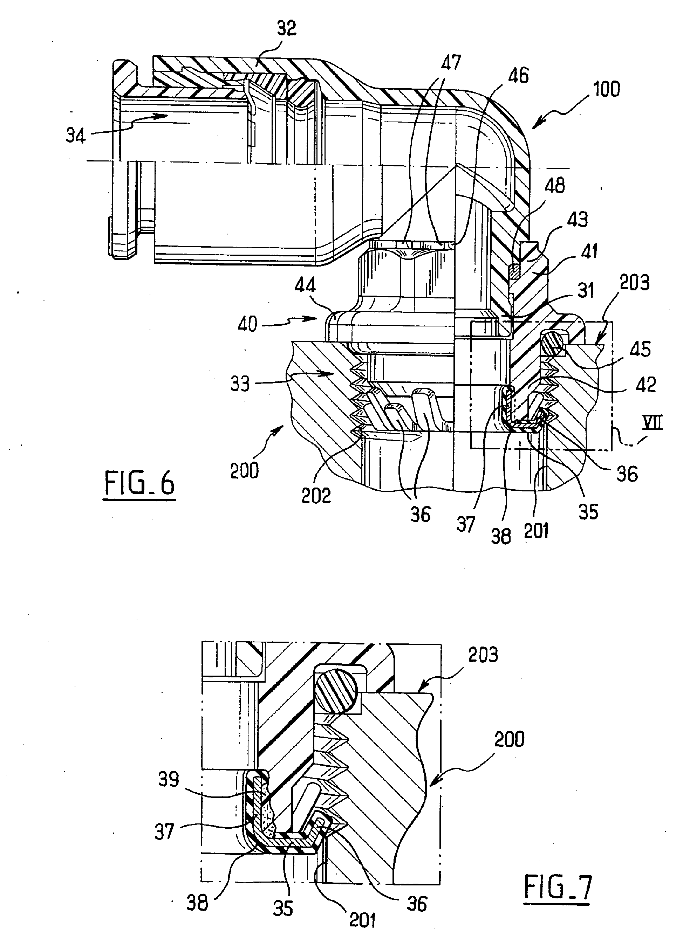

En référence aux figures 6 et 7, le dispositif conforme au deuxième mode de réalisation de l'invention est agencé pour raccorder une extrémité de conduite (non visible sur les figures) à un élément de circuit. Le dispositif de raccordement est destiné à être monté sur un élément de circuit, généralement désigné en 200, comportant un conduit 201 ayant une portion d'extrémité 202 débouchant sur une surface 203 de l'élément de circuit 200. L'élément de circuit 200 peut être un élément émetteur ou récepteur de fluide, comme par exemple une autre conduite, une pompe, un distributeur, un actionneur, une vanne...

Le dispositif de raccordement conforme au deuxième mode de réalisation de l'invention comprend un corps tubulaire, généralement désigné en 100, présentant ici une forme coudée à 90°. Le corps tubulaire 100 est réalisé en une seule pièce de matière plastique telle que du polyamide.

Le corps tubulaire 100 comprend une première portion d'extrémité 31 comportant des moyens, portant la référence générale 33, de son ancrage dans la portion d'extrémité 202 du canal 201, et une deuxième extrémité 32 pourvue d'un logement de réception de l'extrémité de conduite et de moyens, généralement désignés en 34, pour y assujettir de façon étanche l'extrémité de conduite. Les moyens d'assujettissement étanches 34 sont ici des moyens de connexion instantanée qui sont connus en eux-mêmes (voir par exemple le document FR-A-2 810 087) et ne seront donc pas détaillés ici. Ces moyens d'assujettissement peuvent également être des moyens de connexion non instantanée.

Les moyens d'ancrage 33 comportent une embase, généralement désigné en 40, d'appui sur la surface 203 de l'élément de circuit 200. L'embase 40 comporte une douille 41 ayant une première extrémité 42 destinée à être introduite dans la portion d'extrémité 202 du canal 201 et une deuxième extrémité 43 destinée à s'étendre en saillie de celui-ci.

La douille 41 est pourvue extérieurement entre ses deux extrémités 42, 43 d'une collerette 44 ayant une surface inférieure destinée à prendre appui sur la surface 203 de l'élément de circuit 200. La surface inférieure de la collerette 44 est pourvue d'une gorge plane recevant de façon classique un élément d'étanchéité 45 annulaire et déformable.

Le corps tubulaire 100 est reçu dans la douille 41 de l'embase 40 à coulissement entre une position de fonctionnement et une position de démontage. Le corps tubulaire 100 et l'embase 40 comprennent des moyens réciproques de crabotage qui sont agencés de telle manière qu'ils sont dégagés les uns des autres lorsque le corps tubulaire 100 est en position de fonctionnement (le corps tubulaire 100 est alors libre en rotation par rapport à l'embase 40) et qu'ils coopèrent les uns avec les autres lorsque le corps tubulaire 100 est en position de démontage (le corps tubulaire 100 est alors solidaire en rotation de l'embase 40). Ces moyens réciproques de crabotage comprennent ici des saillies axiales 46 agencées sur le corps tubulaire 100 et des renfoncements axiaux 47 agencés sur l'extrémité 43 de la douille 41 de l'embase 40 pour recevoir les saillies axiales 46 du corps tubulaire 100 lorsque celui-ci est en position de démontage.

Sur la portion d'extrémité 42 est montée une rondelle d'ancrage 35 possédant une circonférence externe divisée en une pluralité de dents 36 agencées de telle manière que la rondelle d'ancrage 35 soit élastiquement déformable entre un état ouvert dans laquelle la rondelle d'ancrage 35 a un diamètre externe supérieur à un diamètre interne de la portion d'extrémité 202 du canal 201 et un état refermé dans lequel la rondelle d'ancrage 35 a un diamètre externe inférieur au diamètre interne de la portion d'extrémité 202 du canal 201.

La rondelle d'ancrage 35 est solidaire d'une douille 37 reçue dans l'extrémité 42 du corps tubulaire 100. La douille 37 constitue un élément support de la rondelle d'ancrage 35. La rondelle d'ancrage 35 et la douille 37 sont toutes deux en métal recouvert d'une couche de protection 38 en matière plastique. La rondelle d'ancrage 35 et la douille 37 peuvent être en une seule pièce ou avoir été soudées l'une à l'autre. La douille 37 est reliée à l'extrémité 31 du corps tubulaire 100 par une soudure 39 résultant d'une fusion locale de la couche de protection 38 et de la paroi de l'extrémité 31. La soudure est de préférence réalisée par friction.

La mise en place du dispositif de raccordement est effectuée en introduisant en force la portion d'extrémité 42 de la douille 41 du corps tubulaire 100 dans la portion d'extrémité 202 du canal 201 jusqu'à ce que l'embase 40 arrive en butée contre la surface 203. Au moins une des dents 36 de la rondelle d'ancrage 35 est alors écartée et a sa face d'extrémité en appui contre le filet de la portion d'extrémité 202.

Le démontage est lui réalisé en amenant le corps tubulaire 100 dans sa position de démontage et en faisant pivoter celui-ci de manière à dévisser le dispositif de raccordement.

On remarquera que, de la même manière, il est également possible lors du montage de visser légèrement le dispositif de raccordement pour bien appliquer l'embase 40 contre la surface 203.

On notera que l'élément d'étanchéité 48 annulaire et déformable est intercalé entre deux épaulements appartenant pour l'un au corps tubulaire 100 et pour l'autre à la douille 41. L'élément d'étanchéité 48 assure une fonction de rappel élastique du corps tubulaire 100 en position de fonctionnement. En outre, lorsque le circuit dans lequel est implanté le dispositif de raccordement est sous pression, le fluide sous pression repousse le corps tubulaire 100 en position de fonctionnement.

Bien entendu, l'invention n'est pas limitée aux modes de réalisation décrit et englobe toute variante entrant dans le cadre de l'invention défini par les revendications.

En particulier, la couche de protection peut ne recouvrir que la partie à souder.

## Revendications

1. Dispositif de raccordement comprenant un corps tubulaire (100) comportant une première section de connexion (1) en métal et une deuxième section de connexion (2) en matière plastique pour coopérer respectivement avec un premier conduit (101) et un deuxième conduit (102),la première section de connexion (1) formant un élément support pour un organe d'ancrage (35, 5, 20) en métal, **caractérisé en ce que** l'organe d'ancrage (35, 5, 20)est solidaire de la première section (1) qui est recouverte au moins partiellement d'une couche de matière plastique (39, 9) compatible avec la matière plastique de la deuxième section de connexion (2) et qui est relié à ladite deuxième section (2) par une soudure locale de ladite deuxième section (2) et de ladite couche et l'extrémité de liaison (12) de la deuxième section de connexion (2) est pourvue d'un logement annulaire (15) pour recevoir l'extrémité de liaison (4) de la première section de connexion (1), le logement annulaire étant délimité par deux parois cylindriques coaxiales dont une paroi externe est pourvue d'une zone de frottement (16) sur une portion externe de l'extrémité de liaison de la première section de connexion lors de la soudure.

2. Dispositif selon la revendication 1, dans lequel l'organe d'ancrage (35) est une rondelle à dents solidaire d'une extrémité d'une douille (37) qui est reçue dans le corps tubulaire (100) et forme l'élément support.

3. Dispositif selon la revendication 1, dans lequel la première section de connexion (1) a une extrémité de liaison (4) recouverte de la couche (9) de matière plastique et reliée par soudure à une extrémité de liaison (12) de la deuxième section de connexion à la première section de connexion, et en ce que la première section de connexion (1) délimite un canal (6) ayant un tronçon d'extrémité (6.3) qui est destiné à accueillir une partie terminale du deuxième conduit (102) et qui est pourvu de moyens de sa liaison étanche (7, 9) à la partie terminale du deuxième conduit.

4. Dispositif selon la revendication 1, dans lequel la première section de connexion (1) est agencée pour résister à un effort de sertissage d'une bague (17) sur l'extrémité du premier conduit (101) engagée sur la première section de connexion.

5. Dispositif selon la revendication 1, dans lequel la couche (9) de matière plastique recouvre en totalité la surface extérieure de la première section de connexion (1).

6. Dispositif selon la revendication 1, dans lequel l'organe d'ancrage (5 ; 20) comprend au moins un relief externe ménagé sur la première section de connexion (1).

7. Procédé de fabrication d'un dispositif de raccordement selon l'une quelconque des revendications précédentes, **caractérisé en ce qu'**il comprend les étapes d'appliquer la couche (9 ; 38) de l'élément support (1 ; 37) contre la partie en matière plastique du corps tubulaire (100) et de mettre en mouvement relatif l'élément support et la partie en matière plastique du corps tubulaire pour réaliser une soudure par friction.

8. Procédé selon la revendication 7, dans lequel le mouvement relatif est un mouvement de rotation.

9. Procédé selon la revendication 7, dans lequel le mouvement relatif est obtenu par vibrations.

10. Procédé selon la revendication 7, le corps tubulaire comportant une première section de connexion (1) et une deuxième section de connexion (2) pour coopérer respectivement avec le premier conduit (101) et un deuxième conduit (102), la première section de connexion formant l'élément support de l'organe d'ancrage et étant agencée pour être emmanchée à force dans une extrémité du premier conduit, la deuxième section de connexion formant la partie en matière plastique du corps tubulaire, le procédé comprenant l'étape d'orienter la première section de connexion par rapport à la deuxième section de connexion selon une orientation définitive des sections de connexion, les sections de connexion étant mises en frottement l'une sur l'autre par vibrations en maintenant l'orientation définitive.

## Patentansprüche

1. Verbindungsvorrichtung mit einem rohrförmigen Körper (100), der ein erstes Anschlussstück (1) aus Metall und ein zweites Anschlussstück (2) aus Kunststoff zum jeweiligen Zusammenwirken mit einem ersten Rohr (101) und einem zweiten Rohr (102) umfasst, wobei das erste Anschlussstück (1) ein Trägerelement für ein Verankerungsorgan (35, 5, 20) aus Metall bildet, **dadurch gekennzeichnet, dass** das Verankerungsorgan (35, 5, 20) fest mit dem ersten Anschlussstück (1) verbunden ist, das mindestens teilweise mit einer Schicht aus Kunststoff (39, 9) bedeckt ist, der mit dem Kunststoff des zweiten Anschlussstücks (2) kompatibel ist, und das mit dem besagten zweiten Anschlussstück (2) über eine lokale Schweißstelle des besagten zweiten Anschlussstücks (2) und der besagten Schicht verbunden ist, und dass das Verbindungsende (12) des zweiten Anschlussstücks (2) mit einer ringförmigen Aufnahme (15) versehen ist zum Aufnehmen des Verbindungsendes (4) des ersten Anschlussstücks (1), wobei die ringförmige Aufnahme durch zwei zylindrische koaxiale Wände begrenzt ist, deren äußere mit einer Reibungszone (16) versehen ist, die während des Schweißens auf einem äußeren Abschnitt des Verbindungsendes des ersten Anschlussstücks reibt.

2. Vorrichtung nach Anspruch 1, bei der das Verankerungsorgan (35) eine gezahnte Ringscheibe ist, die fest mit einem Ende einer Hülse (37) verbunden ist, die im rohrförmigen Körper (100) aufgenommen ist und das Trägerelement bildet.

3. Vorrichtung nach Anspruch 1, bei der das erste Anschlussstück (1) ein Verbindungsende (4) besitzt, das von der Schicht (9) aus Kunststoff bedeckt ist und das durch Schweißen mit einem Verbindungsende (12) zum Verbinden des des zweiten Anschlussstücks mit dem ersten Anschlussstück verbunden ist, und wobei das erste Anschlussstück (1) einen Kanal (6) mit einem Endstück (6.3) begrenzt, das dazu bestimmt ist, einen Endabschnitt des zweiten Rohrs (102) aufzunehmen und das mit Mitteln zur dichten Verbindung (7, 9) dieses Endabschnitts mit dem Endabschnitt des zweiten Rohrs versehen ist.

4. Vorrichtung nach Anspruch 1, bei der das erste Anschlussstück (1) so ausgebildet ist, dass es einer auf das Ende des ersten Rohrs (101) wirkenden Spannkraft eines Ringes (17) standhält, der auf das erste Anschlussstück aufgeschoben ist.

5. Vorrichtung nach Anspruch 1, bei der die Kunststoffschicht (9) die Außenfläche des ersten Anschlussstücks (1) vollständig bedeckt.

6. Vorrichtung nach Anspruch 1, bei der das Verankerungsorgan (5 ; 20) mindestens ein äußeres Profil umfasst, das am ersten Anschlussstück (1) ausgebildet ist.

7. Verfahren zum Herstellen einer Verbindungsvorrichtung nach einem der vorstehenden Ansprüche, **dadurch gekennzeichnet, dass** es die Schritte umfasst, die Schicht (9 ; 38) des Trägerelements (1 ; 37) am Kunststoffabschnitt des rohrförmigen Körpers (100) anzubringen und das Trägerelement und den Kunststoffabschnitt des rohrförmigen Körpers zu einer relativen Bewegung zu bringen, um ein Reibungsschweißen zu erzeugen.

8. Verfahren nach Anspruch 7, bei dem die Relativbewegung eine Drehbewegung ist.

9. Verfahren nach Anspruch 7, bei dem die Relativbewegung durch Vibrationen erreicht wird.

10. Verfahren nach Anspruch 7, wobei der rohrförmige Körper ein erstes Anschlussstück (1) und ein zweites Anschlussstück (2) umfasst zum jeweiligen Zusammenwirken mit dem ersten Rohr (101) bzw. einem zweiten Rohr (102), wobei das erste Anschlussstück das Trägerelement des Verankerungsorgans bildet und so ausgebildet ist, dass es in ein Ende der ersten Rohrs eingepresst wird, wobei das zweite Anschlussstück den Kunststoffabschnitt des rohrförmigen Körpers bildet und wobei das Verfahren den Schritt umfasst, das erste Anschlussstück relativ zum zweiten Anschlussstück gemäß einer Endausrichtung der Anschlussstücke auszurichten, wobei die Anschlussstücke unter Aufrechterhaltung der Endausrichtung durch Vibrationen zur Reibung aneinander gebracht werden.

## Claims

1. A coupling device comprising a tubular body (100) comprising a first connection section (1) in metal and a second connection section (2) in plastics material for co-operating respectively with a first duct (101) and with a second duct (102), the first connection section (1) forming a support element for an anchor member (35,5,20) in metal, the coupling device being **characterized in that** the anchor member (35,5,20) is secured to the first connection section (1) which is covered at least in part with a layer of plastics material (39; 9) compatible with the plastics material of the second connection section (2) and which is connected to said second connection section (2) by local welding of said second connection section (2) with said layer and the bonding end (12) of the second connection section (2) is provided with an annular housing (15) for receiving the bonding end (4) of the first connection section (1), the annular housing being defined by two coaxial cylindrical walls, the outer wall thereof being provided with a friction zone (16) for rubbing against an outer portion of the bonding end of the first connection section during welding.

2. A device according to claim 1, in which the anchor member (35) is a toothed washer secured to one end of a bushing (37) that is received in the tubular body (100) and forms the support element.

3. A device according to claim 1, **characterized in that** the first connection section has a bonding end (4) covered in the layer (9) of plastics material and connected by welding to a bonding end (12) for bonding the second connection section to the first connection section, and **in that** the first connection section (1) defines a channel (6) having an end length (6.3) that is designed to receive a terminal portion of the second duct (102) and that is provided with means (7, 9) for bonding it in leaktight manner to the terminal portion of the second duct.

4. A device according to claim 1, in which the first connection section (1) is arranged to withstand a force for crimping a ring (17) on the end of the first duct (101) engaged on the first connection section.

5. A device according to claim 1, in which the layer (9) of plastics material covers the entire outside surface of the first connection section (1).

6. A device according to claim 1, in which the anchor member (5; 20) comprises at least one external portion in relief formed on the first connection section (1).

7. A method of fabricating a coupling device according to any preceding claim, **characterized in that** it comprises the steps of applying the layer (9; 38) of the support element (1; 37) against the plastics material portion of the tubular body (100) and of setting the support element and the plastics material portion of the tubular body into relative motion in order to perform friction welding.

8. A method according to claim 7, in which the relative motion is rotary motion.

9. A method according to claim 7, in which the relative motion is obtained by vibration.

10. A method according to claim 7, the tubular body comprising a first connection section (1) and a second connection section (2) for co-operating respectively with the first duct (101) and with a second duct (102), the first connection section forming the support element of the anchor member and being arranged to be engaged by force in one end of the first duct, the second connection section forming the plastics material portion of the tubular body, the method including the step of orienting the first connection section relative to the second connection section to occupy a final orientation for the connection sections, the connection sections being caused to rub against each other by vibration while maintaining the final orientation.
